Europäisches Patentamt

European Patent Office

Office européen des brevets

(11) Veröffentlichungsnummer: **0 397 133**
**A2**

(12) # EUROPÄISCHE PATENTANMELDUNG

(21) Anmeldenummer: **90108721.3**

(22) Anmeldetag: **09.05.90**

(51) Int. Cl.⁵: **B65G 7/08**

(30) Priorität: **10.05.89 DE 8905807 U**

(43) Veröffentlichungstag der Anmeldung:
**14.11.90 Patentblatt 90/46**

(84) Benannte Vertragsstaaten:
**BE DE NL**

(71) Anmelder: **EURO-KAI KGaA**
**Griesenwerder Damm 6**
**D-2000 Hamburg 95(DE)**

(72) Erfinder: **Griese, Klaus-Dieter**
**Tannenweg 7**
**D-2155 Jork(DE)**

(74) Vertreter: **Schmidt-Bogatzky, Jürgen, Dr. Ing.**
**et al**
**Schlossmühlendamm 4**
**D-2100 Hamburg 90(DE)**

(54) **Vorrichtung zur Lageänderung von zu Rollen aufgewickelten als streifenförmiger Zuschnitt ausgebildeten Bahnen.**

(57) Die Erfindung betrifft eine Vorrichtung zur Lageänderung von zu Rollen aufgewickelten als streifenförmiger Zuschnitt ausgebildeten Bahnen aus Metall, Kunststoff od. dgl. Sie besteht aus einem Tragrah-men 7 mit zwei zueinander parallelen Seitenwangen 8, 9 zwischen denen zwei rechtwinklig zueinander ausgerichtete Gutauflageabschnitte 11, 12 angeord-net sind. Jeder äußere Randabschnitt 12 der Seiten-wangen 8, 9 ist allgemein viertelkreisförmig als Ab-rollfläche 13 ausgebildet. Der eine Gutauflageabschnitt 10 weist eine konkav gewölbte Auflagefläche 14 und der andere Gutauflageabschnitt 11 eine ebe-ne Auflagefläche 15 auf. Der Tragrahmen 7 besteht aus zwei im Abstand zueinander parallel angeordneten rechtwinklig ausgebildeten Rahmenstücken 16, 17, die mittels Quertraversen 18, 19 miteinander verbunden sind.

Fig. 1

Die Erfindung betrifft eine Vorrichtung zur Lageänderung von zu Rollen aufgewickelten als streifenförmiger Zuschnitt ausgebildeten Bahnen aus Metall, Kunststoff od. dgl.

Es ist bekannt, z. B. streifenförmige Zuschnitte von Blech vor der Weiterverarbeitung zu Rollen - sogenannten Coils -aufzuwickeln. Diese Rollen werden im Walzwerk hergestellt und müssen mit üblichen Transportmitteln zum Weiterverarbeiter transportiert werden. Hierzu ist es neuerlich das Bestreben, diese Rollen in Containern zu befördern, da diese Transportbehälter vorteilhaft in bestehende Transportsysteme zu Land, zu Wasser und in der Luft integriert werden können. Auf dem Transport zwischen Hersteller und Seehafen werden die Rollen üblicherweise auf dem Rollenumfang gelagert. Beim Weitertransport im Container ist eine Lagerung auf dem Rollenumfang aufgrund der punktförmigen Auflage nicht möglich. Mit bisher bekannten Mitteln ist eine Lageänderung der Rollen auf einer der Stirnflächen der Rolle nicht möglich, da bei einer Lageänderung der Rollen von der horizontalen in die vertikale Lage die Gefahr besteht, daß durch Stoßeinwirkungen und Punktlast beim Kippen die Seitenkanten der Rollenbahn beschädigt werden. Derartige Bahnabschnitte sind für eine Weiterverarbeitung z. B. zu profilierten Blechteilen nicht mehr geeignet.

Die Aufgabe der Erfindung besteht darin, eine Vorrichtung zu schaffen, mittels derer eine Verladung von Rollen der eingangs genannten Art auf Transportmitteln, insbesondere in Containern, möglich ist, ohne daß die Gefahr einer Beschädigung des bänderförmigen Rollenmaterials besteht.

Erfindungsgemäß erfolgt die Lösung der Aufgabe durch die kennzeichnenden Merkmale des Anspruchs 1. Ausgestaltungen der Erfindung werden in den abhängigen Ansprüchen beschrieben.

Die Erfindung wird nachstehend am Beispiel der in den Zeichnungen dargestellten Vorrichtung näher erläutert. Es zeigt:

Fig. 1 die Vorrichtung in einer perspektivischen Ansicht,

Fig. 2 die Vorrichtung nach Fig. 1 in einer Seitenansicht,

Fig. 3 die Vorrichtung nach Fig. 1 in einer Ansicht in Richtung X,

Fig. 4 die Vorrichtung nach Fig. 1 in einer Ansicht in Richtung Y,

Fig. 5 eine Ausführung des Rahmens der Vorrichtung nach Fig. 1 in einer Seitenansicht,

Fig. 6 den Rahmen nach Fig. 5 in einer Ansicht in Richtung Y,

Fig. 7 bis 9 die Vorrichtung nach Fig. 1 in drei verschiedenen Betriebsstellungen in einer schematischen Seitenansicht.

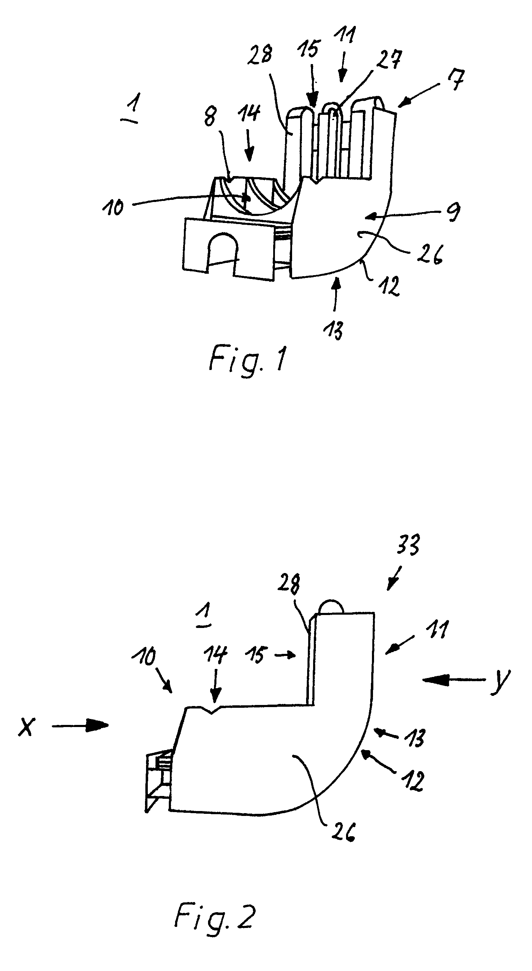

Die Vorrichtung 1 besteht aus einem Tragrahmen 7 mit zwei zueinander parallelen Seitenwangen 8, 9. Zwischen den Seitenwangen 8, 9 sind zwei rechtwinklig zueinander ausgerichtete Gutauflageabschnitte 10, 11 angeordnet. Jeder äußere Randabschnitt 12 der Seitenwangen 8, 9 ist viertelkreisförmig als Abrollfläche 13 ausgebildet. Der eine Gutauflageabschnitt 10 weist eine konkav gewölbte Auflagefläche 14 und der andere Gutauflageabschnitt 11 eine ebene Auflagefläche 15 auf. Vorzugsweise bestehen der Tragrahmen 7 und die Seitenwangen 8, 9 aus miteinander verschweißten Profilstücken aus Stahl. Es sind aber auch Schraub- oder Nietverbindungen möglich (Fig. 1 bis Fig. 4).

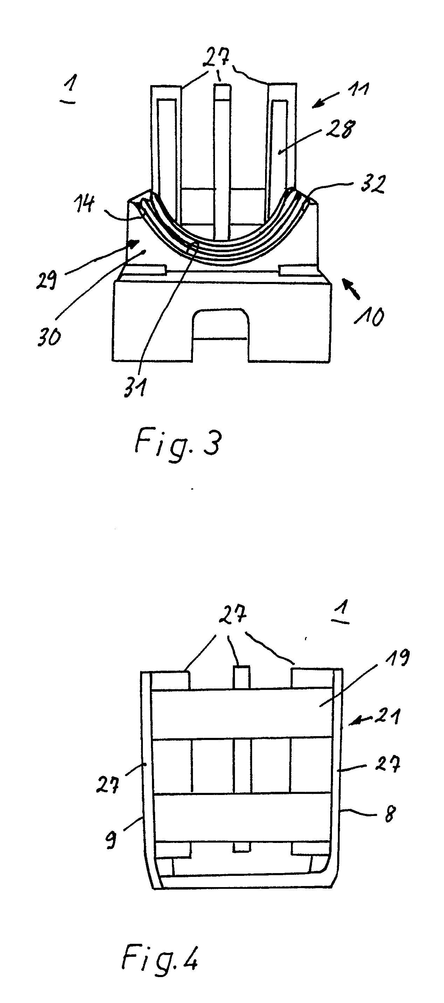

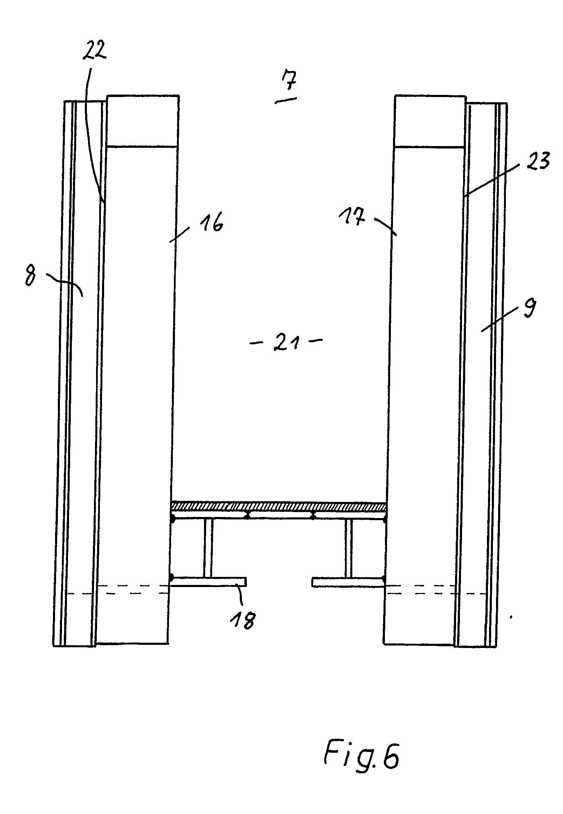

Der Tragrahmen 7 besteht aus zwei im Abstand zueinander parallel angeordneten rechtwinklig ausgebildeten Rahmenstücken 16, 17. Die Rahmenstücke 16, 17 sind mittels Quertraversen 18, 19 miteinander verbunden. Sie bilden zwei rechtwinklig zueinander angeordnete Tragrahmenabschnitte 20, 21, auf denen die Gutauflageabschnitte 10, 11 ausgebildet werden (Fig. 4 bis Fig. 6).

Die Seitenwangen 8, 9 sind jeweils an den Außenseiten 22, 23 der Rahmenstücke 16, 17 angeordnet. Jede Seitenwange 8, 9 kann als scheibenförmigen Zuschnitt mit allgemein viertelkreisförmigem äußeren Randabschnitt 12 sein. In diesem Fall wird zweckmäßigerweise auf den äußeren Randabschnitten 12 jeweils ein streifenförmiger Zuschnitt aus Bandstahl od. dgl. als Abrollfläche 13, 14 angeordnet. Diese Zuschnitte können mit einem stoßdämpfenden Material belegt sein.

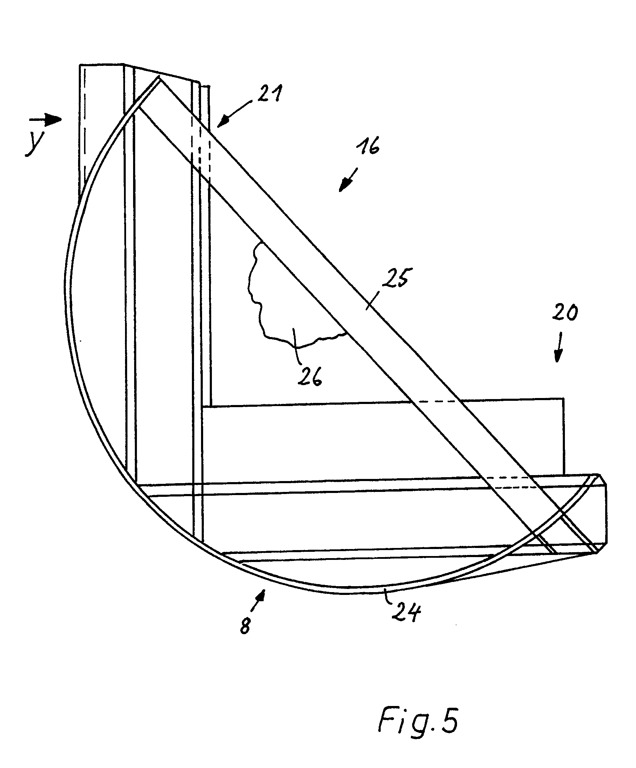

Wie in Fig. 5 angedeutet, kann jede Seitenwange 8, 9 aber auch aus einem viertelkreisförmig gebogenen streifenförmigen Zuschnitt 24 aus Bandstahl bestehen, der endabschnittseitig mit einem stab- oder streifenförmigen Versteifungsprofil 25 verbunden ist. Jeder der Zuschnitte 24 und jedes Versteifungsprofil 25 wird in diesem Fall mit dem zugehörigen Rahmenstück 16, 17 durch z. B. Schweißung verbunden. Zur Erhöhung der Steifigkeit ist es zweckmäßig, zwischen den Zuschnitten 24 und den Versteifungsprofilen 25 jeweils ein Versteifungsblech 26 anzuordnen. Auch bei dieser Ausführung von Seitenwangen 8, 9 ist es vorteilhaft auf deren äußeren Randabschnitten 12 jeweils eine Auflage 27 aus einem stoßdämpfenden Material vorzusehen (Fig. 2 und Fig. 4).

Auf den Quertraversen 19 des einen Tragrahmenabschnitts 21 sind rechtwinklig zu den Quertraversen 19 im Abstand voneinander stabförmige Auflagerprofilstücke 27 angeordnet. Diese können aus einem stoßdämpfenden Material wie Holz od. dgl. bestehen. Es ist aber auch möglich, auf den Auflagerprofilstücken 27, wenn diese z. B. aus Metall bestehen, jeweils einen streifenförmigen Zuschnitt 28 aus einem stoßdämpfenden Werkstoff vorzusehen (Fig. 1 und Fig. 3). Zwischen den Seitenwangen 8, 9 im Bereich des anderen Tragrahmenabschnitts 20 sind drei Auflagerstücke 29 mit konkav gewölbter Auflagerfläche 14 angeordnet (Fig. 1 bis Fig. 4). Die Auflagerstücke 29 sind als scheibenförmiger Zuschnitt 30 mit einem einseitig konkaven Ausschnitt 31 ausgebildet. Es ist aber auch möglich, gebogene stabförmige Profilkörper als Auflagerstücke 29 vorzusehen. Im Bereich der Ausschnitte 31 ist auf jedem Zuschnitt 30 ein streifenförmiger Zuschnitt aus Bandstahl angeordnet. Die konkav gewölbte Auflagerfläche 14 der Auflagerstücke 29 wird durch auf diesen befindliche Auflagen 32 aus stoßdämpfenden Werkstoff gebildet. Es ist auch möglich, auf die streifenförmigen Zuschnitt aus Bandstahl auf den Zuschnitten 30 zu verzichten. In diesem Fall ist es erforderlich, im Bereich eines jeden Ausschnitts 31 der Zuschnitte 30 ein angepaßt profiliertes Auflagerstück aus einem stoßdämpfenden Werkstoff wie Holz oder Kunststoff vorzusehen. Die scheibenförmigen Zuschnitte 30 werden zweckmäßigerweise im Bereich der Quertraversen 18 des Tragrahmenabschnitts 20 angeordnet.

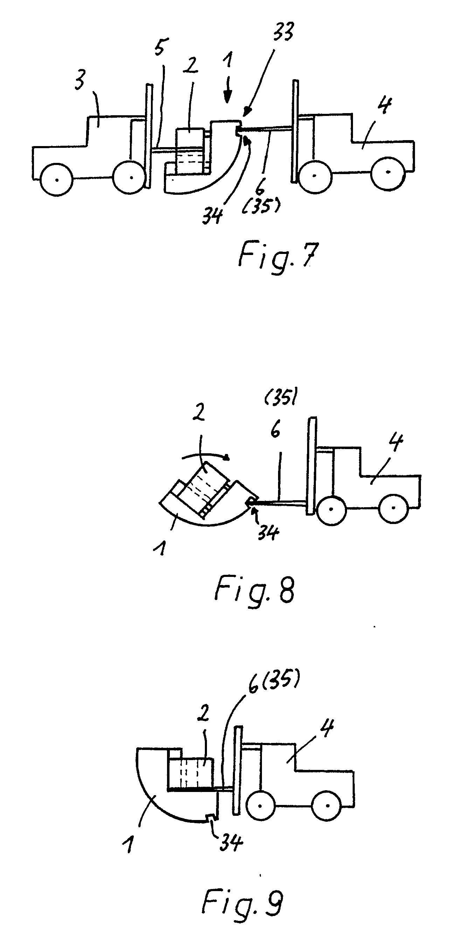

Im Bereich der Stirnfläche 33 des die ebene Auflagerfläche 15 aufweisenden Gutauflageabschnitts 11 ist eine Einrichtung zum Stützen der Vorrichtung 1 vorgesehen. Diese Einrichtung kann als Ausnehmung 34 im Tragrahmenabschnitt 21 ausgebildet sein, wobei die Ausnehmung 34 zur Aufnahme von Stützgliedern 35 dient. Die Funktion dieser Ausnehmung 34 ist in den Fig. 7 bis 9 verdeutlicht. Diese Figuren zeigen drei unterschiedliche Betriebsstellungen der Vorrichtung 1 während der Lageveränderung einer Rolle 2. In der Ausgangsstellung wird die Vorrichtung 1 mittels der Gabel 6 eines Gabelstaplers 4 so gestützt, daß die Längsachse der gewölbten Auflagerfläche 14 horizontal ausgerichtet ist. In dieser Stellung kann mittels eines weiteren Gabelstaplers 3 eine Rolle 2 auf die konkav gewölbte Auflagerfläche 14 aufgelegt werden. Hierzu wird ein Zinken einer Gabel 5 oder ein entsprechender Dorn am Gabelstapler 3 in die mittige Durchbrechung der Rolle 2 eingeführt, so daß diese angehoben und auf die gewölbte Auflagerfläche 14 gelegt werden kann. Nach Lösen der Verbindung mit dem Gabelstapler 3 durch dessen Zurückfahren wird die Vorrichtung 1 langsam dadurch geschwenkt, daß der Gabelstapler 4 zurückfährt. Hierbei rutscht die Rolle 2 langsam bis auf die ebene Auflagerfläche 15 der Vorrichtung 1 (Fig. 8). Durch das Eigengewicht der Rolle 2 wird die Vorrichtung 1 soweit geschwenkt, daß sich die ebene Auflagefläche 15 in einer horizontalen Lage befindet (Fig. 9). In dieser Stellung kann der Gabelstapler 4 seine Gabel 6 zwischen die Auflagerstücke 27 einschieben, wobei sich die Gabel 6 unterhalb der einen Stirnfläche der Rolle 2 befindet. Durch Anheben der Gabel 6 kann die Rolle 6 aus der Vorrichtung 1 entfernt und aufrechtstehend in z. B. einen Container eingebracht werden.

## Ansprüche

1. Vorrichtung zur Lageänderung von zu Rollen aufgewickelten als streifenförmiger Zuschnitt ausgebildeten Bahnen aus Metall, Kunststoff od. dgl. mit einem aus Profilstücken aus Stahl bestehenden Tragrahmen (7) mit zwei zueinander parallelen Seitenwangen (8, 9), zwischen denen zwei rechtwinklig zueinander ausgerichtete Gutauflageabschnitte (10, 11) angeordnet sind, wobei jeder äußere Randabschnitt (12) der Seitenwangen (8, 9) allgemein viertelkreisförmig als Abrollfläche (13) ausgebildet ist und der eine Gutauflageabschnitt (10) eine konkav gewölbte Auflagefläche (14) und der andere Gutauflageabschnitt (11) eine ebene Auflagefläche (15) aufweist, dadurch gekennzeichnet, daß der Tragrahmen (7) zwei im Abstand zueinander parallel angeordnete rechtwinklig ausgebildete Rahmenstücke (16, 17) aufweist, die mittels Quertraversen (18, 19) miteinander verbunden sind und zur Ausbildung der Gutauflageabschnitte (10, 11) zwei rechtwinklig zueinander angeordnete Tragrahmenabschnitte (20, 21) bilden, daß an den Außenseiten (22, 23) der Rahmenstücke (16, 17) jeweils eine Seitenwange (8, 9) angeordnet ist und daß auf den Quertraversen (19) des einen Tragrahmenabschnitts (21) rechtwinklig zu den Quertraversen (19) im Abstand voneinander stabförmige Auflagerprofilstücke (27) angeordnet sind.

2. Vorrichtung nach Anspruch 1, dadurch gekennzeichnet, daß die Seitenwangen (8, 9) als scheibenförmige Zuschnitte mit allgemein viertelkreisförmigem äußeren Randabschnitt (12) ausgebildet sind, auf denen ein streifenförmiger Zuschnitt als Auflage aus einem stoßdämpfenden Werkstoff als Abrollfläche angeordnet ist.

3. Vorrichtung nach Anspruch 1, dadurch gekennzeichnet, daß jede Seitenwange (8, 9) aus einem allgemein viertelkreisförmig gebogenen streifenförmigen Zuschnitt (24) aus Bandstahl besteht, der endabschnittseitig mit einem stab- oder streifenförmigen Versteifungsprofil (25) verbunden ist und daß jeder der Zuschnitte (24) und jedes Versteifungsprofil (25) mit dem zugehörigen Rahmenstück (16, 17) verbunden ist.

4. Vorrichtung nach Anspruch 3, dadurch gekennzeichnet, daß zwischen den Zuschnitten (24) und den Versteifungsprofilen (25) jeweils ein Versteifungsblech (26) angeordnet ist.

5. Vorrichtung nach Anspruch 1, dadurch gekennzeichnet, daß die Auflagerprofilstücke (27) aus einem stoßdämpfenden Werkstoff bestehen.

6. Vorrichtung nach Anspruch 1, dadurch gekennzeichnet, daß auf den Auflagerprofilstücken (27) jeweils ein streifenförmiger Zuschnitt (28) aus einem stoßdämpfenden Werkstoff angeordnet ist.

7. Vorrichtung nach Anspruch 1, dadurch gekennzeichnet, daß zwischen den Seitenwangen (8, 9) des anderen Tragrahmenabschnitts (20) Auflagerstücke (29) mit konkav gewölbter Auflagefläche (14) angeordnet sind.

8. Vorrichtung nach Anspruch 7, dadurch gekennzeichnet, daß die Auflagerstücke (29) als gebogene stabförmige Profilkörper ausgebildet sind.

9. Vorrichtung nach Anspruch 7, dadurch gekennzeichnet, daß die Auflagerstücke (29) als scheibenförmige Zuschnitte (30) mit einem einseitig konkaven Ausschnitt (31) ausgebildet sind.

10. Vorrichtung nach Anspruch 9, dadurch gekennzeichnet, daß im Bereich des Ausschnitts (31) auf dem Zuschnitt (30) ein stabförmiger Zuschnitt aus Bandstahl angeordnet ist.

11. Vorrichtung nach Anspruch 9, dadurch gekennzeichnet, daß im Bereich des Ausschnitts (31) auf dem Zuschnitt (30) ein Auflagerstück aus Holz oder Kunststoff angeordnet ist.

12. Vorrichtung nach Anspruch 7, dadurch gekennzeichnet, daß die Auflagefläche (14) der Auflagerstücke (29) durch auf den Auflagerstücken (29) angeordnete Auflagen (32) aus stoßdämpfendem Werkstoff gebildet ist.

13. Vorrichtung nach Anspruch 9, dadurch gekennzeichnet, daß auf jeder Quertraverse (18) des Tragrahmenabschnitts (20) ein scheibenförmiger Zuschnitt (30) angeordnet ist.

14. Vorrichtung nach Anspruch 1, dadurch gekennzeichnet, daß im Bereich der Stirnfläche (33) des die ebene Auflagerfläche (15) aufweisenden Gutauflageabschnitts (11) an dem zugeordneten Tragrahmenabschnitt (21) eine Ausnehmung (34) zur Aufnahme von Stützgliedern (35) ausgebildet ist.

Fig. 1

Fig. 2

Fig. 3

Fig. 4

Fig.5

Fig.6

Fig. 7

Fig. 8

Fig. 9